# EUROPÄISCHE PATENTANMELDUNG

(11) **EP 1 331 076 A1**
(43) Veröffentlichungstag der Anmeldung: **30.07.2003**
(21) Anmeldenummer: 02020911.0
(22) Anmeldetag: 19.09.2002
(51) Int. Cl.: B29C 45/17, H05B 3/58

(54) **Vorrichtung zur Befestigung eines elektrischen Heizkörpers auf der Spritzdüse von Spritzgiesswerkzeugen**

(30) Priorität: 25.01.2002 DE 20201067 U
(71) Anmelder: Hotset Heizpatronen u. Zubehör GmbH, 58511 Lüdenscheid (DE)
(72) Erfinder: Schwartzkopf, Eugen, 58509 Lüdenscheid (DE); Wegener, Hans, 58762 Altena (DE)
(74) Vertreter: Köchling, Conrad-Joachim

(57) **Zusammenfassung**

Um eine Vorrichtung zur Befestigung eines elektrischen Heizkörpers in Form einer Wendelrohrpatrone (1) auf der Spritzdüse (2) von spritzgießwerkzeugen oder dergleichen beheizbaren zylindrischen Bauteilen, bestehend aus einer die Wendelrohrpatrone (1) umfangsseitig umgebenden Manschette (3), mittels derer die Wendelrohrpatrone (1) auf dem zu beheizenden Bauteil festspannbar ist zu schaffen, die hinsichtlich ihres Platzbedarfes erheblich beschränkt ist, wird vorgeschlagen, dass die Manschette (3) aus einem Bimetallblechstreifen besteht, dessen in Umfangsrichtung endende Randkanten aneinander verhakt sind, so dass eine ringförmige Manschette (3) gebildet ist, und dass der innen liegende Mantelteil der Manschette (3) einen geringeren Wärmeausdehnungskoeffizienten als der außen liegende Mantelteil aufweist.

## Beschreibung

Die Erfindung betrifft eine Vorrichtung zur Befestigung eines elektrischen Heizkörpers in Form einer Wendelrohrpatrone auf der Spritzdüse von Spritzgießwerkzeugen oder dergleichen beheizbaren zylindrischen Bauteilen, bestehend aus einer die Wendelrohrpatrone umfangsseitig umgebenden Manschette, mittels derer die Wendelrohrpatrone auf dem zu beheizenden Bauteil festspannbar ist.

Eine derartige Vorrichtung ist beispielsweise in der DE 37 36 612 C2 beschrieben. Obwohl sich solche Vorrichtungen im Stand der Technik bewährt haben, besteht ein gewisses Problem darin, dass die bisherigen Befestigungsvorrichtungen erheblich über den Umfang der im Querschnitt kreisförmigen Wendelrohrpatrone vorragen, so dass ein zusätzlicher Platzbedarf für diese vorspringende Befestigungsvorrichtung besteht. Bei mancherlei Einsatzzwecken ist der Einbauraum so eng, dass vorspringende Teile nicht oder nur schwer unterbringbar sind. Es besteht daher ein Bedarf dahingehend, eine Vorrichtung gattungsgemäßer Art zu schaffen, die hinsichtlich ihres Platzbedarfes erheblich beschränkt ist.

Zur Lösung dieser Aufgabe schlägt die Erfindung vor, dass die Manschette aus einem Bimetallblechstreifen besteht, dessen in Umfangsrichtung endende Randkanten aneinander verhakt sind, so dass eine ringförmige Manschette gebildet ist, und dass der innen liegende Mantelteil der Manschette einen geringeren Wärmeausdehnungskoeffizienten als der außen liegende Mantelteil aufweist.

Ein wesentlicher Vorteil der erfindungsgemäßen Ausbildung ist einerseits, dass die erfindungsgemäße Manschette in der Montagesollposition nur gering über den Außenumfang der im Querschnitt ringförmigen Wendelrohrpatrone vorragt, so dass auch bei engsten Einbauräumen die Anordnung einer solchen Manschette möglich ist. Andererseits besteht ein wesentlicher Vorteil darin, dass die Manschette allein durch Erwärmung der Wendelrohrpatrone die Wendelrohrpatrone zunehmend auf den zu beheizenden Körper spannt, was durch die angegebene Bimetallanordnung erreicht wird. Schließlich führt diese Anordnung auch dazu, dass die mit der Manschette ausgerüstete Wendelrohrpatrone auch leicht im Bedarfsfall gewechselt werden kann, da die Manschette in kaltem Zustand die Wendelrohrpatrone nicht mehr fest auf den zu beheizenden Körper spannt, sondern die Wendelrohrpatrone nur lose haltert, so dass die komplette Einheit leicht von dem zu beheizenden Gegenstand, beispielsweise von der Spritzdüse des Spritzgießwerkzeuges axial abgezogen werden kann.

Eine bevorzugte Weiterbildung wird darin gesehen, dass die Randkanten der Manschette auf Stoß angeordnet sind, wobei an einen Randkantenbereich hakenartige, hammerkopfartige oder rundkopfartige Flachhaken angeformt und am anderen Randkantenbereich dazu formgleiche Ausnehmungen vorgesehen sind, in die die Flachhaken einlegbar sind.

Unter Umständen ist auch eine bevorzugte Weiterbildung darin zu sehen, dass ein Randkantenbereich der Manschette mit fensterartigen Ausschnitten versehen ist und der andere Randkantenbereich, der vorzugsweise verkröpft ist, außen über die Ausschnitte gelegt ist und mit ausgeformten, gegebenenfalls freigeschnittenen Rastnasen in die Ausschnitte eingreift.

Zudem ist bevorzugt vorgesehen, dass die Verhakungsbereiche in Umfangsrichtung in Druckund Zugrichtung wirksam ausgebildet sind.

Weitere bevorzugte Einzelheiten sind in den Unteransprüchen angegeben. Ausführungsbeispiele der Erfindung sind in der Zeichnung dargestellt und im Folgenden näher beschrieben.

Es zeigt:
- Figur 1: eine erste Ausführungsform in Seitenansicht;
- Figur 2: desgleichen Stirnansicht;
- Figur 3: einen Ausschnitt in Blickrichtung des Pfeiles III der Figur 2 gesehen;
- Figur 4: eine zweite Ausführungsform in der Ansicht gemäß Figur 1 gesehen;
- Figur 5: desgleichen in der Ansicht gemäß Figur 2 gesehen;
- Figur 6: eine Ausschnittvergrößerung in der Blickrichtung gemäß Figur 5 gesehen;
- Figur 7: die Einzelheit in Blickrichtung des Pfeiles VII der Figur 5 gesehen.

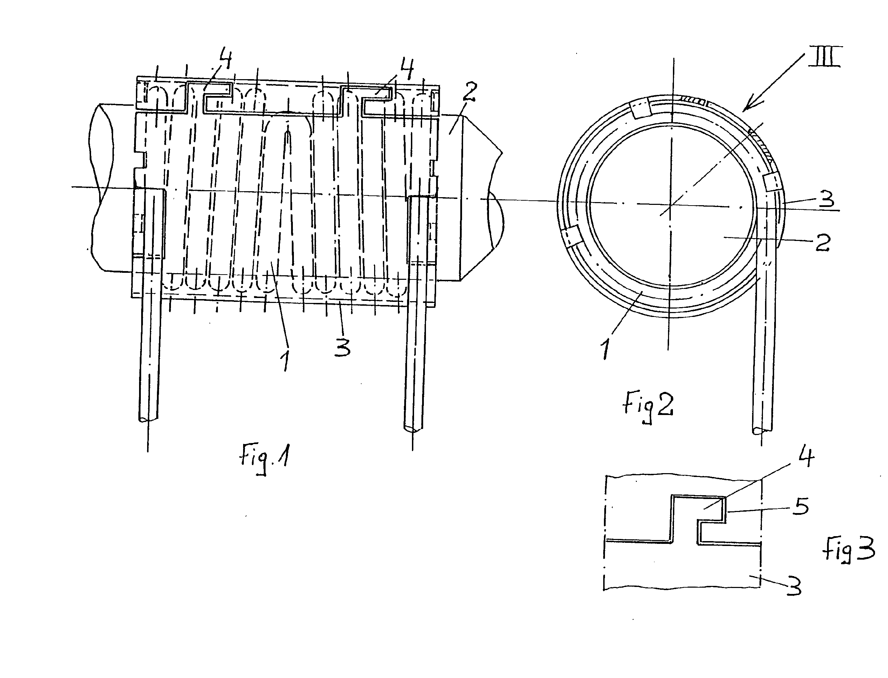

In der Zeichnung ist eine Vorrichtung zur Befestigung eines elektrischen Heizkörpers in Form einer Wendelrohrpatrone 1 auf der zylindrischen Spritzdüse 2 eines Spritzgießwerkzeuges gezeigt. Die Befestigungsvorrichtung besteht dabei aus einer die Wendelrohrpatrone 1 umfangsseitig umgebenden Manschette 3, mittels derer die Wendelrohrpatrone 1 auf dem zu beheizenden Bauteil (2) festspannbar ist. Die Manschette 3 besteht aus einem Bimetallblechstreifen, dessen in Umfangsrichtung endende Randkanten aneinander verhakt sind, wie insbesondere aus der Darstellung gemäß Figur 3 ersichtlich. Dabei weist der innen liegende Mantelteil der Manschette 3 einen geringeren Wärmeausdehnungskoeffizienten als der außen liegende Mantelteil auf. Bei der Ausführungsform gemäß Figur 1 bis 3 sind die Randkanten der Manschette 3 auf Stoß angeordnet, wobei an einem Randkantenbereich hakenartige, hammerkopfartige oder rundkopfartige Flachhaken 4 angeschnitten sind und am anderen Randkantenbereich dazu formgleiche Ausklinkungen 5 vorgesehen sind, in die die Flachhaken einlegbar sind, so dass Zugund Druckkräfte in Umfangsrichtung übertragbar sind und auch eine Verschiebung der Teile in axialer Richtung ausgeschlossen ist.

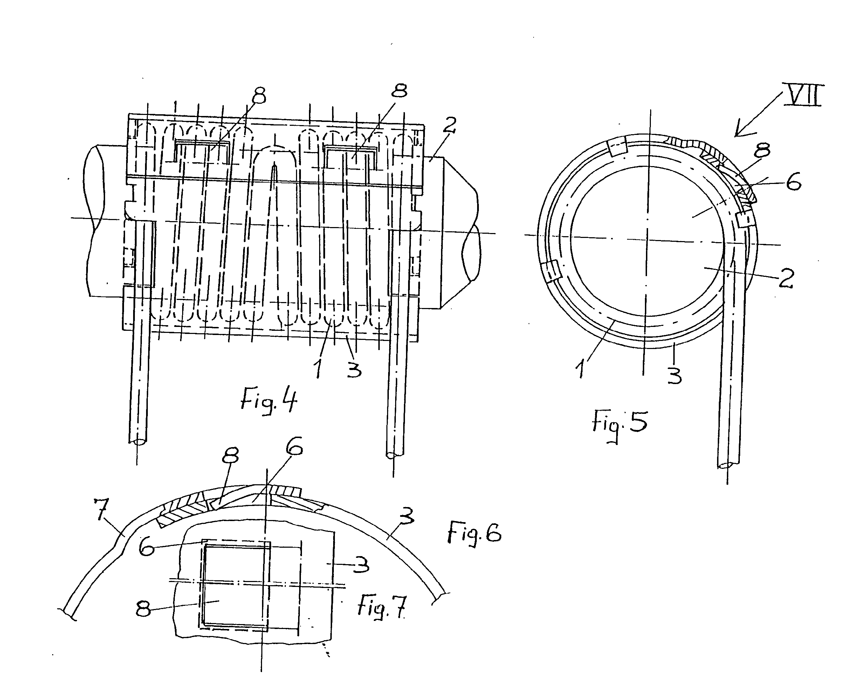

Bei der Ausführungsform nach Figur 4 bis 7 ist ein Randkantenbereich der Manschette 3 mit fensterartigen Ausschnitten 6 versehen, während der andere Randkantenbereich gekröpft ist (Kröpfung 7) und außen über die Ausschnitte 6 gelegt ist sowie mit ausgeformten und ggf. freigeschnittenen Rastnasen 8 in die Ausschnitte 6 eingreift. Die freigeschnittenen bzw. ausgeschnittenen Rastnasen können einseitig, wie in Figur 6 ersichtlich, in den fensterartigen Ausschnitt 6 eingreifen. Sie können aber auch beidseitig an den quer zur Umfangsrichtung gerichteten Randkanten angreifen, um Zug- und Druckkräfte übertragen zu können.

Bei allen Ausführungsformen erstreckt sich die Manschette 3 über die gesamte axiale Länge der Wendelrohrpatrone 1. Die Blechstärke des Bimetallblechstreifens aus dem die Manschette 3 gebildet ist, kann etwa 1 mm betragen, während die axiale Länge der Manschette 3 ebenso wie die Länge des Wendelrohrpatronenkörpers etwa 30 mm bis 250 mm betragen kann. Der Innendurchmesser der Manschette 3 beträgt vorzugsweise etwa 10 bis 28 mm.

Die Erfindung ist nicht auf die Ausführungsbeispiele beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Befestigung eines elektrischen Heizkörpers in Form einer Wendelrohrpatrone (1) auf der Spritzdüse (2) von Spritzgießwerkzeugen oder dergleichen beheizbaren zylindrischen Bauteilen, bestehend aus einer die Wendelrohrpatrone (1) umfangsseitig umgebenden Manschette (3), mittels derer die Wendelrohrpatrone (1) auf dem zu beheizenden Bauteil festspannbar ist, **dadurch gekennzeichnet, dass** die Manschette (3) aus einem Bimetallblechstreifen besteht, dessen in Umfangsrichtung endende Randkanten aneinander verhakt sind, so dass eine ringförmige Manschette (3) gebildet ist, und dass der innen liegende Mantelteil der Manschette (3) einen geringeren Wärmeausdehnungskoeffizienten als der außen liegende Mantelteil aufweist.

2. Vorrichtung nach Anspruch 1, **dadurch gekennzeichnet, dass** die Randkanten der Manschette (3) auf Stoß angeordnet sind, wobei an einen Randkantenbereich hakenartige, hammerkopfartige oder rundkopfartige Flachhaken (4) angeformt und am anderen Randkantenbereich dazu formgleiche Ausnehmungen (5) vorgesehen sind, in die die Flachhaken (4) einlegbar sind.

3. Vorrichtung nach Anspruch 1, **dadurch gekennzeichnet, dass** ein Randkantenbereich der Manschette (3) mit fensterartigen Ausschnitten (6) versehen ist und der andere Randkantenbereich, der vorzugsweise verkröpft ist, außen über die Ausschnitte (6) gelegt ist und mit ausgeformten, gegebenenfalls freigeschnittenen Rastnasen (8) in die Ausschnitte (6) eingreift.

4. Vorrichtung nach einem der Ansprüche 1 bis 3, **dadurch gekennzeichnet, dass** die Verhakungsbereiche in Umfangsrichtung in Druck- und Zugrichtung wirksam ausgebildet sind.

5. Vorrichtung nach einem der Ansprüche 1 bis 4, **dadurch gekennzeichnet, dass** die Manschette (3) sich über die gesamte axiale Länge der Wendelrohrpatrone (1) erstreckt.

6. Vorrichtung nach einem der Ansprüche 1 bis 5, **dadurch gekennzeichnet, dass** die Blechstärke des Bimetallblechstreifens etwa 1 mm beträgt.

7. Vorrichtung nach einem der Ansprüche 1 bis 6, **dadurch gekennzeichnet, dass** die axiale Länge der Manschette (3) etwa 30 bis 250 mm beträgt.

8. Vorrichtung nach einem der Ansprüche 1 bis 7, **dadurch gekennzeichnet, dass** der Durchmesser der Manschette (3) an den Außenumfang der Wendelrohrpatrone (1) eng angepasst ist und insbesondere etwa 10 bis 28 mm beträgt.
